Europäisches Patentamt

European Patent Office

Office européen des brevets

(19)

(11) Veröffentlichungsnummer: **0 270 837**

**A1**

(12) **EUROPÄISCHE PATENTANMELDUNG**

(21) Anmeldenummer: **87116239.2**

(22) Anmeldetag: **04.11.87**

(51) Int. Cl.⁴: **G05B 19/18**

(30) Priorität: **08.12.86 DE 3641888**

(43) Veröffentlichungstag der Anmeldung:
**15.06.88 Patentblatt 88/24**

(84) Benannte Vertragsstaaten:
**CH DE FR GB IT LI**

(71) Anmelder: **MAHO Aktiengesellschaft**
**Postfach 1280**
**D-8962 Pfronten(DE)**

(72) Erfinder: **Seitz, Manfred**
**Wiesenweg 5**
**D-8959 Rosshaupten(DE)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Verfahren und Vorrichtung zur Lageregelung für motorisch bewegte Bauteile von NC- und CNC-Werkzeugmaschinen.**

(57) Die Erfindung betrifft ein Verfahren und eine Vorrichtung zur Lageregelung für motorisch bewegte Bauteile von NC-und CNC-Werkzeugmaschinen mit direkter Lagemessung. Ein bei Erreichen der Soll-Lage eines Bauteils 1 der Werkzeugmaschine von einem Meßkopf 2 erzeugtes Meßsignal wird von einer digitalen Steuerung 7, die Bestandteil einer Lageregelung 5 ist, in ein die Drehrichtung des Antriebsmotors 10 änderndes Umkehrsignal umgesetzt. Die normale Lageregelung wird durch das Umkehrsignal unterbrochen und gleichzeitig wird in einem Korrektur-Regelkreis 20 ein vorbestimmter Rückstellwert 57 erzeugt, der als Rückstellsignal 59 der Lageregelung überlagert wird und den Antriebsmotor 10 um einen der Umkehrspanne entsprechenden Winkel zurückdreht.

Fig. 1

EP 0 270 837 A1

0 270 837

M A H O  AG

Postfach 1280

D-8962 Pfronten/Allgäu


Verfahren und Vorrichtung zur Lageregelung für
motorisch bewegte Bauteile von NC- und CNC-Werkzeugmaschinen


Die Erfindung betrifft ein Verfahren und eine Vorrichtung zur
Lageregelung für motorisch bewegte Bauteile von NC- und
CNC-Werkzeugmaschinen mit direkter Lagemessung gemäß den
Oberbegriffen der Ansprüche 1 und 5.

Bei der direkten Lagemessung ist das Meßsystem unmittelbar
zwischen dem festen und dem zu bewegenden Maschinenteil
angebracht,so daß die Lage des bewegten Bauteils direkt erfaßt
werden kann. Vorhandene Umkehrspannen wirken nur innerhalb des
Lageregelkreises. Ferner treten keine bleibenden
Lageabweichungen auf.

Ein Nachteil ist jedoch, daß die nicht starre Verbindung
zwischen Antriebssystem und Meßsystem zu Unstetigkeiten oder
Nichtlinearitäten im Lageregelkreis führt.

Umkehrspannen im Lageregelkreis verursachen

a) Pendelungen um die Sollposition oder bei entsprechender
   Bedämpfung ungenaues Anfahren der Position;

b) Konturungenauigkeiten an den Quadrantenwechseln
   beim Kreisfräsen.

Deshalb muß zur Optimierung des Lageregelkreises die
Umkehrspanne klein gehalten werden. Die Gesamtumkehrspanne ergibt sich dabei aus dem Umkehrspiel und der
Reibungsumkehrspanne.

Bislang wurden zur Vermeidung der Umkehrspanne eine entsprechende konstruktive Bemessung und Anordnung der mechanischen Übertragungselemente - wie Vorschubantriebsmotor, Getriebekupplungen, Spindelachslager, System aus
Gewindespindel - Gewindemutter (bei Gewindespindelantrieb) sowie System aus Ritzel bzw. Schnecke und Zahnstange (beim Zahnstangen- und Schneckenantrieb) - vorgeschlagen.

Im einzelnen sind - wie allgemein bekannt - zur Vermeidung des Umkehrspiels vorgeschlagen worden:

- Verspannte Getrieberäder,
- Verspannen der Gewindemutter gegenüber der Gewindespindel,
- Vorspannen der Gewindespindellagerung,
- verspanntes Ritzel bzw. Schnecke gegenüber der Zahnstange und
- konstruktive Maßnahmen wie starre Bemessung von Schraubverbindungen    und Lagerumbauteilen, größerer Wellendurchmesser.

Zur Vermeidung der Reibungsumkehrspanne wurde bislang
vorgeschlagen, die geschwindigkeitsunabhängige Reibung
grundsätzlich klein zu halten.

Ferner ist eine Führungsgrößenbeeinflussung der Lagesollwerte zur Reduzierung der dynamischen Bahnabweichun-

- 3 -

gen bekannt. Da dabei das Zeitverhalten der Lagesollwerte durch eine Verzögerung beeinflußt wird, spricht man auch von Lagesollwertglättung.

Die Lagesollwertglättung bringt insbesondere bei Anfahr-, Haltevorgängen und Richtungsänderungen im Lageregelkreis Vorteile (siehe z.B. Siemens-Fachbuch "Elektrische Vorschubantriebe für Werkzeugmaschinen", Siemens Aktiengesellschaft 1981).

Es ist Aufgabe der Erfindung, ein Verfahren und eine Vorrichtung zur Lageregelung für motorisch bewegte Bauteile von NC- und CNC-Werkzeugmaschinen mit direkter Lagemessung anzugeben, die es ermöglichen, die beim Richtungswechsel des Vorschubantriebs auftretende Umkehrspanne automatisch mit elektrischen Maßnahmen auszugleichen.

Zur Lösung der Aufgabe ist das Verfahren zur Lageregelung für motorisch bewegte Bauteile von NC- und CNC-Werkzeugmaschinen mit direkter Lagemessung und einer Antriebsregeleinheit, die die durch die Lagemessung ermittelte Ist-Lage des Bauteiles mit einer Führungsgröße verknüpft und einen Stellwert erzeugt, der einem Antriebsmotor zugeführt wird, wobei die Antriebsregeleinheit einen Lageregelkreis enthält, der bei Erreichen der Sollage des Bauteils ein entsprechendes Lagemeßsignal erhält und daraus ein die Drehrichtung des Antriebsmotors änderndes Umkehrsignal erzeugt,
erfindungsgemäß dadurch gekennzeichnet, daß
die Lageregelung durch das Umkehrsignal unterbrochen und gleichzeitig ein vorbestimmter Rückstellwert erzeugt wird, der der Lageregelung überlagert wird und den Antriebsmotor um einen der Umkehrspanne entsprechenden Winkel zurückdreht.

Eine vorteilhafte Weiterbildung davon besteht sinngemäß darin, bei geschlossenem Lageregelkreis die Vorschub-Sollgeschwindigkeit des Antriebsmotors zu erfassen und nur bei

- 4 -

Erreichen einer bestimmten Vorschub-Sollgeschwindigkeit
den vorbestimmten Rückstellwert zu erzeugen.

Vorteilhafterweise wird weiterhin vorgeschlagen, bei geschlossenem Lageregelkreis den Beginn und das Ende der
Bremsbeschleunigung zu erfassen und den vorbestimmten
Rückstellwert nur nach dem Ende der Bremsbeschleunigung
zu erzeugen. In weiterer vorteilhafter Ausbildung wird
die Größe des Rückstellwerts entsprechend der Lage des
Bauteils eingestellt.

Die die Aufgabe lösende Vorrichtung zur Lageregelung für
motorisch bewegte Bauteile von NC- und
CNC-Werkzeugmaschinen mit
einer Meßeinrichtung zur direkten Lagemessung,
einer Antriebsregeleinheit, die die Istlage des bewegten
Bauteils mit einer Lage-Führungsgröße verknüpft, und
einem Antriebsmotor, dem ein Antriebssignal zugeführt wird,
wobei die Antriebsregeleinheit von der Meßeinrichtung bei
erreichter Sollage ein entsprechendes Lagemeßsignal erhält
und daraufein die Drehrichtung des Antriebsmotors änderndes
Umkehrsignal erzeugt,
ist erfindungsgemäß gekennzeichnet durch
einen Korrektur-Regelkreis mit einem vom Umkehrsignal angesteuerten Logikglied, mit einem Impulserzeuger und mit
einem Schaltglied, das der Lageregelung bei Empfang des
Lagemeßsignals ein der Umkehrspanne entsprechendes Rückstellsignalvon vorbestimmter Dauer und Amplitude für den
Antriebsmotor überlagert.

In vorteilhafter Ausgestaltung weist der Korrektur-Regelkreis einen Vergleicher auf, der einen der Vorschubgeschwindigkeit des Antriebsmotors entsprechenden Wert mit einem
vorgegebenen Referenzwert vergleicht und ein Vorbereitungs-
Signal an das Logikglied abgibt, sobald der Wert den Referenzwert erreicht.

- 5 -

Eine vorteilhafte Ausbildung davon besteht darin, daß die
Größe des Rückstellsignals durch ein Impulshöhenbestimmungsglied und ein Impulsdauerbestimmungsglied bestimmt ist.

Weitere vorteilhafte Ausgestaltungen der erfindungsgemäßen Vorrichtung ergeben sich aus den restlichen Unteransprüchen 8 - 12.

Messungen haben ergeben, daß sich durch die erfindungsgemäße Vorrichtung eine Verbesserung der Positionsgenauigkeit um etwa 50 % erzielen läßt und daß die typischen
Nachteile der durch die Umkehrspanne verursachten Pendelungen um die Sollage sowie der Konturungenauigkeiten an
den Quadrantenwechseln weitgehend vermieden sind.

Die Erfindung wird im folgenden anhand von Ausführungsbeispielen in Bezug auf die Zeichnung näher beschrieben.

Es zeigen

Fig. 1   einen Lageregelkreis als Blockdiagramm, der die
         erfindungsgemäße Vorrichtung aufweist, in funktionellem Zusammenhang mit einer schematisch
         dargestellten Werkzeugmaschine,

Fig. 2   die erfindungsgemäße Vorrichtung als Blockdiagramm,

Fig. 3   Impuls-Zeitdiagramme zur Erläuterung der Arbeitsweise der Erfindung.

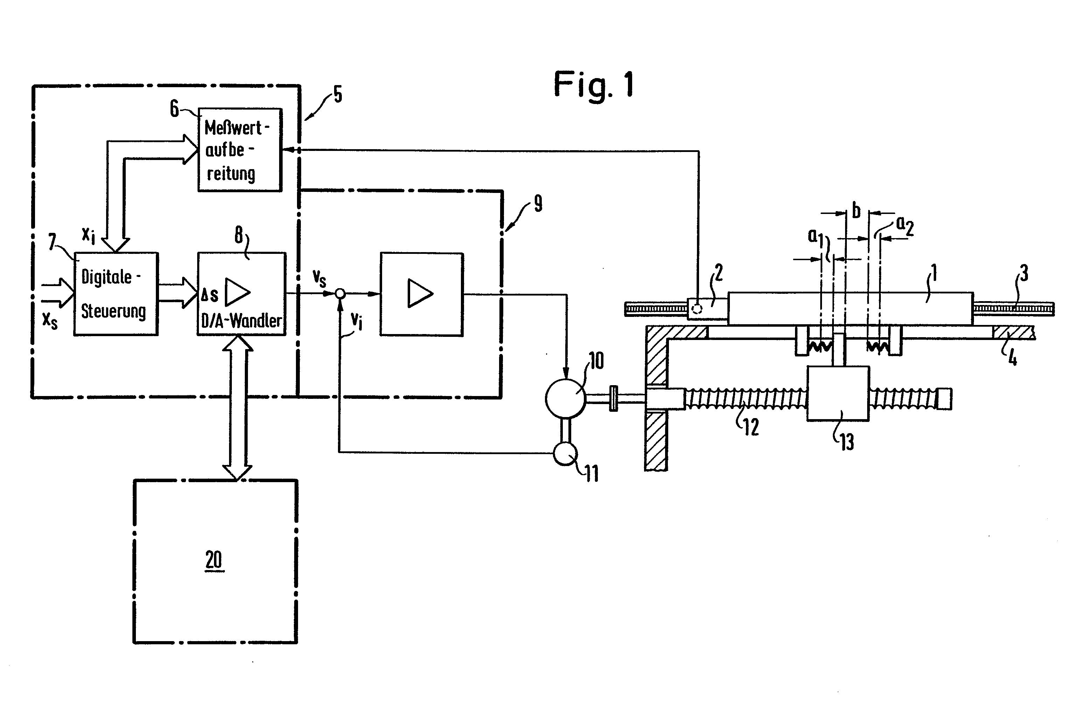

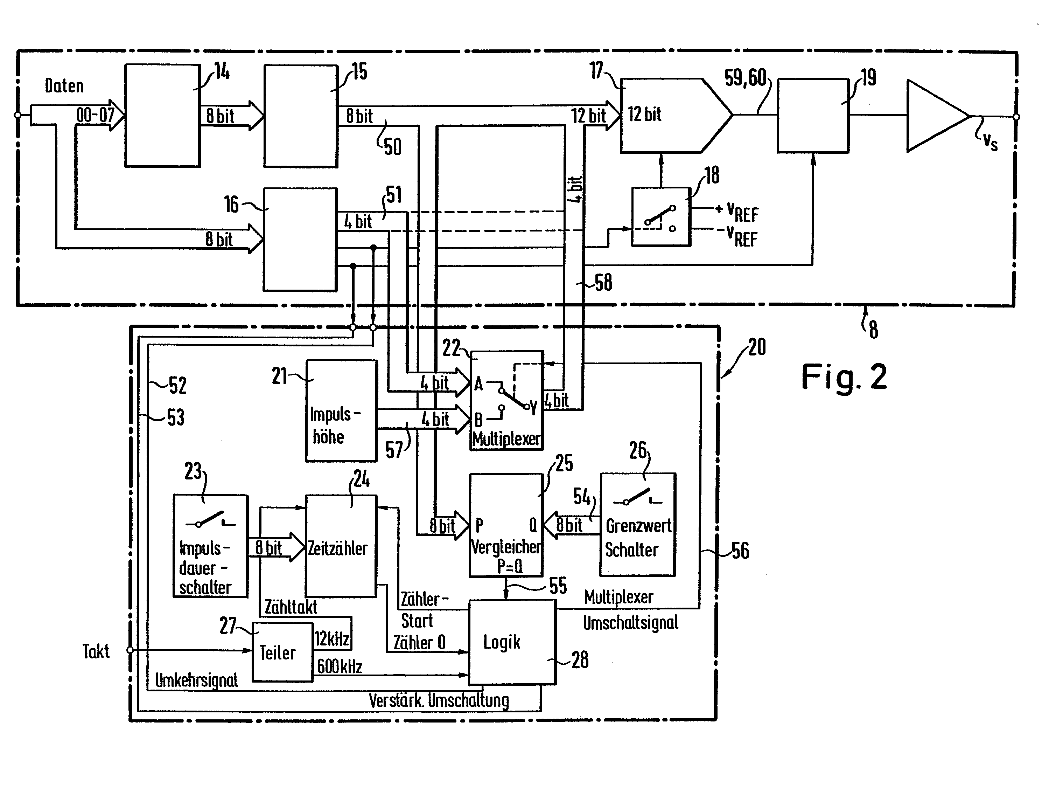

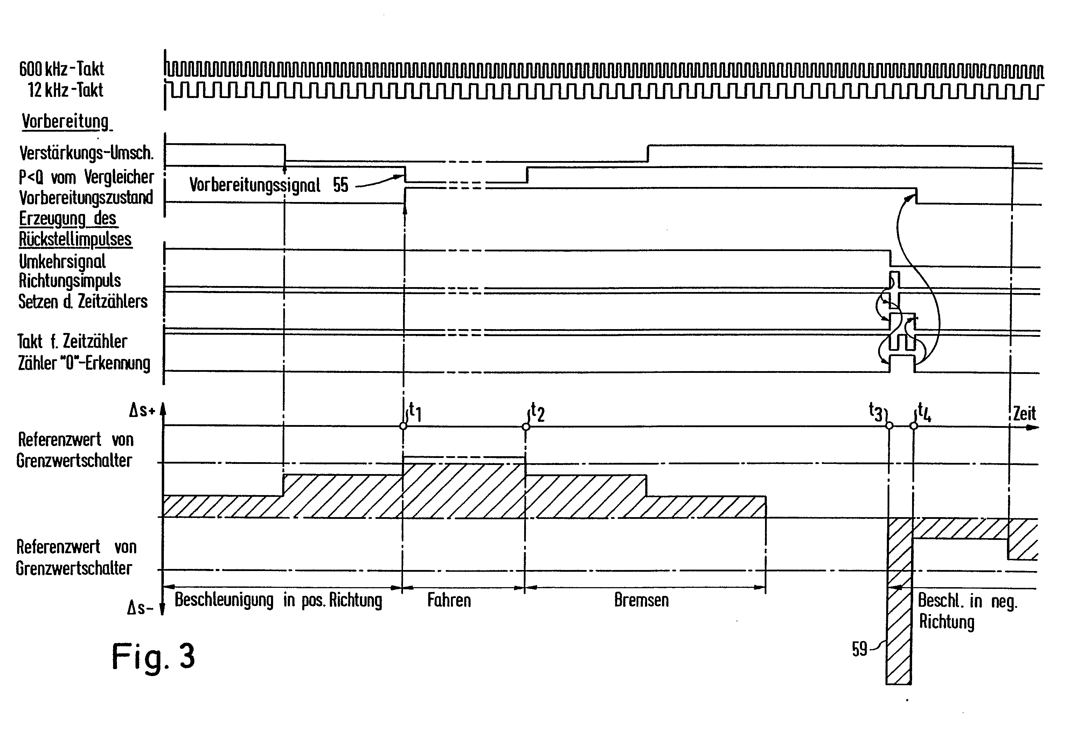

Im folgenden wird zunächst das vorgeschlagene Verfahren
anhand der Fig. 1, die vorgeschlagene Vorrichtung anhand
eines Ausführungsbeispiels gemäß Fig. 2 sowie dessen Arbeitsweise anhand der Impuls-Zeitdiagramme in Fig. 3 erläutert.

Gemäß Fig. 1 weist der Tisch 1 einer Werkzeugmaschine ein aus einem Meßkopf 2 und einem Meßlineal 3 bestehendes Meßsystem zur direkten Messung der Lage des Tisches 1 gegenüber einem stationären Maschinenrahmen 4 auf. Das vom Meßkopf 2 gelieferte Signal wird einer Lageregelung 5 eingegeben und dort von einer Meßwertaufbereitung 6 in ein digitales Istlagesignal $x_i$ umgesetzt, das einer Digitalsteuerung 7 zugeführt wird. Die digitale Steuerung 7 erzeugt aus dem Ist-Lagesignal $x_i$ und einem als Führungsgröße zugeführten Soll-Lagesignal $x_s$ ein als Schleppabstand bezeichnetes Stellsignal $\triangle s$. Das in digitaler Form vorliegende Stellsignal $\triangle s$ wird durch einen D/A-Wandler 8 in ein analoges Stellsignal $v_s$ umgesetzt, das einer Antriebsregelung 9 als Soll-Geschwindigkeit eingegeben wird. Die Antriebsregelung 9 erhält außerdem ein vom Antriebsmotor 10 des Tisches 1 über einen Tachometer 11 abgeleitetes Drehzahlsignal $v_i$. Aus der Differenz der Ist-Geschwindigkeit $v_i$ und der Sollgeschwindigkeit $v_s$ wird ein Stellsignal für den Antriebsmotor 10 durch die Antriebsregelung 9 erzeugt.

Sobald der Tisch 1 seine Soll-Lage erreicht hat, erzeugt die digitale Steuerung 7 in der Lageregelung 5 ein die Drehrichtung des Antriebsmotors 10 änderndes Umkehrsignal.

Der Antriebsmotor 10 treibt eine Gewindespindel 12, deren Mutter 13 am Tisch 1 angreift. Durch elastische Verformung z.B. der Lager (Kugel, Rollen) der Gewindespindel, der durch sie bewegten Mutter, des Ständerfußes und des Lagerbauteils wird die sog. Reibungsumkehrspanne verursacht, deren Größe sich aus der Summe $a_1 + a_2$ in Fig. 1 ergibt.

Das z.B. durch das Spiel in der Spindellagerung und der Umlaufmutter verursachte Umkehrspiel ist in Fig. 1 mit b bezeichnet.

Die Gesamtumkehrspanne $2\mathcal{E}_u$ ergibt sich als
$$2\mathcal{E}_u = a_1 + a_2 + b.$$

Erfindungsgemäß wird die Lageregelung in dem Moment, wo das Umkehrsignal erzeugt wird, unterbrochen und gleichzeitig ein vorbestimmtes Rückstellsignal 59 erzeugt, das der Lageregelung überlagert wird und den Antriebsmotor 10 um einen der Gesamtumkehrspanne entsprechenden Winkel zurückdreht. Dies erfolgt mittels eines Korrektur-Regelkreises 20, der mit der Lageregelung 5 über Leitungen 50 bis 53 und 58 verbunden ist (Fig. 2).

Da die Gesamtumkehrspanne $2\mathcal{E}_u$ sowohl von der Lage des Tisches als auch von der Vorschub-Sollgeschwindigkeit abhängt, ist zweckmäßigerweise vorgesehen, daß das vorbestimmte Rückstellsignal nur erzeugt wird, wenn eine bestimmte Vorschub-Sollgeschwindigkeit erreicht wird.

In weiterer vorteilhafter Ausführung kann die die Lageregelung 5 aufgrund des Umkehrsignals unterbrechende Vorrichtung integraler Teil der digitalen Steuerung 7 sein.

Ein vom Korrektur-Regelkreis 20 erzeugter digitaler Rückstellwert 57 wird vom D/A-Wandler 8 in ein der Umkehrspanne entsprechendes analoges Rückstellsignal 59 von bestimmter Dauer und Amplitude umgesetzt. Die Bemessung der Dauer und der Amplitude für das Rückstellsignal 59 kann abhängig von der Vorschuß-Geschwindigkeit erfolgen. Ferner kann die Bemessung der Dauer und der Amplitude des Rückstellsignals 59 abhängig von der Lage des Tisches 1 und auch abhängig vom Maschinentyp erfolgen.

Fig. 2 zeigt eine bevorzugte Ausführungsform des erfindungsgemäßen Korrektur-Regelkreises 20 gemäß Fig. 1, der mit dem D/A-Wandler 8 gekoppelt ist. Modifikationen der Verbindungsleitungen ergeben sich jedoch durch die Schnittstelle mit der Vorrichtung 5 zur Lageregelung.

Die digitale Steuerung 7 der Lageregelung 5 gibt über
einen Datenbus (Daten 00-07) einen digitalen Wert aus,
der ein Soll-Geschwindigkeitssignal, das Umkehrsignal
und ein Verstärkungsumschaltungssignal enthält. Dieser
digitale Wert wird in Datenpuffern 14, 15 und 16 zwischengespeichert. Zwölf Datenbits am Ausgang der Pufferspeicher 15 und 16, die das Soll-Geschwindigkeitssignal
darstellen, werden über Leitungen 50, 51 und 58 einer
Ditital/Analogwandlereinheit 17 zugeführt, die ein analoges Antriebssignal 60 für den Antriebsmotor 10 während der normalen Lageregelung erzeugt. Die D/A-Wandlereinheit 17 steht außerdem in Verbindung mit einem
Polaritätsumschaltglied 18, das auf ein Vorschubrichtungsstellwert-Digitalsignal auf der Leitung 52 anspricht.

Das Ausgangssignal der D/A-Wandlereinheit 17 wird einem
Verstärkungsfaktoreinsteller 19 zugeführt, dem auf der
Leitung 53 ein Signal zur Festlegung des Verstärkungsfaktors für das Antriebssignal 60 bzw. das Rückstellsignal 59 zuführbar ist. Die am Ausgang des Datenpufferspeichers 15 liegenden niedrigstwertigen acht Bits werden direkt der D/A-Wandlereinheit 17 und gleichzeitig
dem Korrektur-Regelkreis 20 zugeführt. Die höherwertigen vier Bits des Soll-Geschwindigkeitssignals, die am
Ausgang des Datenpuffers 16 liegen, werden dem Korrekturregelkreis 20 zugeführt, wo sie an einem Eingang A
eines Multiplexers 22 anliegen. Am Ausgang Y des Multiplexers 22 liegen diese dem Eingang A zugeführten vier
Bits in der dargestellten Schalterstellung an und werden über Leitungen 58 direkt den Eingängen der D/A-Wandlereinheit 17 zugeführt. Der Multiplexer 22 empfängt
an einem zweiten Eingang B ein Vier-Bit-Signal von
einem Impulshöhenbestimmungsglied 21 über Leitungen
57. Der Multiplexer 22 schaltet die an seinem Eingang B
liegenden vier Bits als Rückstellwert zu seinem Ausgang durch, sobald er voneinem Logikglied 28 ein Umschaltsignal über eine Leitung 56 erhält.

Dieses Multiplexer-Umschaltsignal (56) wird also von
demLogikglied 28 erzeugt.

Der Korrektur-Regelkreis 20 weist ferner einen Vergleicher 25 mit einem Eingang P auf, dem die niedrigstwertigsten acht Bits des Soll-Geschwindigkeits-Digital-
Signals auf den Leitungen 50 anliegen. Einem Vergleichseingang Q des Vergleichers 25 liegt ein ebenfalls acht
Bits umfassender Referenzwert von einem Grenzwertschalter 26 über Leitungen 54 an. Der Vergleicher 25 erzeugt
bei Gleichheit der an den Eingängen P und Q liegenden
acht Bit-Signale an seinem Ausgang P = Q ein Vorbereitungssignal 55, das dem Logikglied 28 eingegeben wird.

Das Impuls-Zeitdiagramm in Fig. 3 zeigt, daß zum Zeitpunkt $t_1$ die Bedienung P = Q erfüllt ist und der Vergleicher 25 das Signal 55 erzeugt, welches zum Zeitpunkt
$t_1$ das Logikglied 28 in einen Vorbereitungszustand versetzt. Der Zeitpunkt $t_1$ ist durch die Einstellung des
Grenzwertschalters 26 bestimmt, der gemäß Fig. 3 so eingestellt ist, daß der Referenzwert 54 erst zum Zeitpunkt
$t_1$ erreicht bzw. überschritten wird.

- 10 -

Zu diesem Zeitpunkt $t_1$ beendet der Vorschubantrieb
eine Phase der Beschleunigung des Schlittens in positiver Richtung und tritt in eine Phase konstanter
Fahrgeschwindigkeit ein. Zum Zeitpunkt $t_2$ tritt der
Antrieb in eine Phase der Bremsbeschleunigung ein,
an deren Ende die Soll-Geschwindigkeit 0 erreicht
wird. Letzterer Zustand wird kurz vor dem Zeitpunkt
$t_3$ erreicht. Zum Zeitpunkt $t_3$ schließlich hat der
Schlitten seine Soll-Lage erreicht, und die digitale
Steuerung 7 erzeugt das Umkehrsignal. Das Umkehrsignal wird über die Leitung 52 dem Logikglied 28 eingegeben und darin zur Bestimmung des Beginns des
Umschaltsignals 56 verwendet. Das Multiplexer-Umschaltsignal 56 startet mit seiner Vorderflanke ebenfalls zum Zeitpunkt $t_3$.

Das Ende des Multiplexer-Umschaltsignals 56 wird durch
ein Impulsdauerbestimmungsglied bestimmt. Das Impulsdauerbestimmungsglied weist einen Impulsdauerschalter
23 auf, der einen einen 12-kHz-Takt zählenden Zeitzähler 24 auf einen bestimmten der Impulsdauer des
Multiplexer-Umschaltsignals 56 entsprechenden Wert
voreinstellt. Vom voreingestellten Wert ab zählt der
Zeitzähler 24 die 12-kHz-Zähltakte, bis er den Zählerstand 0 erreicht. Der Null-Zustand des Zeitzählers
24 wird im Logikglied 28 erkannt, worauf das Multiplexer-Umschaltsignal 56 zu einem Zeitpunkt $t_4$ beendet wird. Der Zeitpunkt $t_4$ bestimmt auch das Ende des
Vorbereitungszustandes.

Der Multiplexer 22 schaltet demnach für die Dauer des
Umschaltsignals 56 vom Eingang A zum Eingang B und
führt statt der vier Bits am Ausgang des Datenpufferspeichers 16 den Rückstellwert 57 vom Impulshöhenbestimmungsglied 21 der Digital/Analog-Wandlereinheit
17 zu. Folglich entspricht die Dauer des vom D/A-Wandler
17 erzeugten Rückstellimpulses 59 dem am Impulsdauer-

schalter 23 eingestellten Wert, während die Impulshöhe des Rückstellimpulses 59 von dem am Impulshöhenbestimmungsglied 21 eingestellten Wert bestimmt ist.

Als weitere Bedingung zur Erzeugung des Multiplexer-
Umschaltsignals auf der Leitung 56 erhält das Logikglied 28 das Signal zur Verstärkungsumschaltung auf
der Leitung 53, das ebenfalls zur Vorbereitung des
Logikgliedes 28 verwendet wird. Der Betrieb des Logikglieds 28 erfolgt taktsynchron mit einem in Fig. 3
ganz oben dargestellten 600-kHz-Takt, aus dem mittels
eines Taktteilers 27 der 12-kHz-Zähltakt für den
Zeitzähler 24 erzeugt wird.

Die Wirkung des erfindungsgemäß erzeugten Rückstellimpulses 59 besteht nun darin, daß unmittelbar zum
Zeitpunkt, wo der Tisch 1 seine Soll-Lage erreicht,
durch das von der digitalen Steuerung 7 auf den Empfang
des entsprechenden Sollage-Meßsignals erzeugte Umkehrsignal eine Rückdrehung des Antriebsmotors 10
um einen der Umkehrspanne entsprechenden Winkel erfolgt. Die vorstehend beschriebene bevorzugte Ausführungsform des Korrektur-Regelkreises 20 erfordert einen verhältnismäßig geringen Aufwand an Schaltelementen und eine leicht durchzuführende und übersichtliche Leitungsführung.

Die als weitere Ausführungsform erwähnte Integration
der erfindungsgemäßen Vorrichtung zur Erzeugung des
der Umkehrspanne entsprechenden Rückstellimpulses in
die digitale Steuerung 7 der Lageregelung 5 hat folgende Vorteile:

1. Die Zuweisung des Referenzwerts für den Vergleich
mit dem Soll-Geschwindigkeitssignal und die Bestimmung
der Impulsdauer können abhängig von Betriebsparametern, wie Vorschubgeschwindigkeit, Lage, Ausführung des Antriebsmotors 10 und Maschinentyp über die Software
der digitalen Steuerung 7 erfolgen.

2. Bei zweidimensionalen Antrieben in X- und Y-Richtung kann das Umkehrspiel vom jeweiligen Quadrantenwechsel, z.B. beim Fahren von Kreisen, abhängig sein.
Über die Software der digitalen Steuerun 7 läßt sich
eine dem jeweiligen Quadrantenwechsel entsprechende
Dauer des Rückstellimpulses bestimmen.

## Patentansprüche

1. Verfahren zur Lageregelung für motorisch bewegte Bauteile von NC- und CNC-Werkzeugmaschinen mit direkter Lagemessung und einer Antriebsregeleinheit, die die durch die Lagemessung ermittelte Ist-Lage des Bauteils mit einer Führungsgröße verknüpft und einen Stellwert erzeugt, der einem Antriebsmotor zugeführt wird, wobei die Antriebsregeleinheit einen Lageregelkreis enthält, der bei Erreichen der Sollage des Bauteils ein entsprechendes Lagemeßsignal erhält und daraus ein die Drehrichtung des Antriebsmotors änderndes Umkehrsignal erzeugt, **d a d u r c h   g e k e n n z e i c h n e t ,** daß die Lageregelung durch das Umkehrsignal unterbrochen und gleichzeitig ein vorbestimmter Rückstellwert erzeugt wird, der der Lageregelung überlagert wird und den Antriebsmotor um einen der Umkehrspanne entsprechenden Winkel zurückdreht.

2. Verfahren nach Anspruch 1, bei welchem bei geschlossenem
Lageregelkreis die Vorschub-Sollgeschwindigkeit des Antriebsmotors erfaßt wird,
dadurch gekennzeichnet,
daß der vorbestimmte Rückstellwert nur erzeugt wird, wenn
eine bestimmte Vorschub-Sollgeschwindigkeit erreicht wird.

3. Verfahren nach Anspruch 1 oder 2,
dadurch gekennzeichnet,
daß bei geschlossenem Lageregelkreis der Beginn und das Ende
der Bremsbeschleunigung erfaßt wird und daß der vorbestimmte
Rückstellwert nur nach dem Ende der Bremsbeschleunigung erzeugt wird.

4. Verfahren nach einem der Ansprüche 1 bis 3,
dadurch gekennzeichnet,
daß die Größe des Rückstellwerts entsprechend der Lage des
Bauteils eingestellt wird.

5. Vorrichtung zur Lageregelung für motorisch bewegte Bauteile von NC- und CNC-Werkzeugmaschinen mit

einer Meßeinrichtung (2, 6) zur direkten Lagemessung,

einer Antriebsregeleinheit (5, 9), die die Istlage ($x_i$) des
bewegten Bauteils mit einer Lage-Führungsgröße ($x_s$) verknüpft, und

einem Antriebsmotor (10), dem ein Antriebssignal (60)
zugeführt wird, wobei die Antriebsregeleinheit (5, 9) von
der Meßeinrichtung (2, 6) bei erreichter Sollage ein entsprechendes Lagemeßsignal erhält und darauf ein die Drehrichtung des Antriebsmotors änderndes Umkehrsignal (52)
erzeugt,
gekennzeichnet durch
einen Korrektur-Regelkreis (20) mit einem vom Umkehrsignal
(52) angesteuerten Logikglied (28), mit einem Impulserzeuger
(21, 23) und mit einem Schaltglied (22), das der Lageregelung bei Empfang des Lagemeßsignals ein der
Umkehrspanne entsprechendes Rückstellsignal (59) von
vorbestimmter Dauer und Amplitude für den Antriebsmotor (10)
überlagert.

6. Vorrichtung nach Anspruch 5,
dadurch gekennzeichnet,
daß der Korrektur-Regelkreis (20) einen Vergleicher (25)
aufweist, der einen der Vorschubgeschwindigkeit des
Antriebsmotors (10) entsprechenden Wert (50) mit einem
vorgegebenen Referenzwert (54) vergleicht und ein
Vorbereitungs-Signal (55) an das Logikglied (28) abgibt,
sobald der Wert (50) den Referenzwert (54) erreicht.

7. Vorrichtung nach Anspruch 5 oder 6,
dadurch gekennzeichnet,
daß die Größe des Rückstellsignals (59) durch ein
Impulshöhenbestimmungsglied (21) und ein Impulsdauerbestimmungsglied (23, 24) bestimmt ist.

8. Vorrichtung nach einem der Ansprüche 5 bis 7,
dadurch gekennzeichnet, daß

- die Antriebsregeleinheit (5, 9) eine digitale
  Verarbeitungseinheit (7) aufweist, die einen Lagestellwert
  ($\Delta s$) und einen Vorschubrichtungsstellwert ($\Delta s_R$) als
  Digitalsignale (50, 51, 52) erzeugt,

— ein Digital/Analogwandler (17) das Lagestellwert-Digitalsignal (50, 51) in das analoge Antriebssignal (60)
  umsetzt,

- ein Polaritätsumschaltglied (18) auf das
  Vorschubrichtungsstellwert-Digitalsignal (52) anspricht
  und darauf einen Polaritätswechsel des analogen

0 270 837

- 4 -

Antriebssignals (60) bewirkt, und

- die vier höchstwertigen Bits (51) des Lagestellwert-Digitalsignals durch das Umschaltglied (22) abgetrennt und stattdessen vier Bits eines Rückstellwerts (57) vom Impulshöhenbestimmungsglied (21) dem restlichen Lagestellwert-Digitalsignal (50) zur Erzeugung des Ausgleichsimpulses hinzugefügt werden.

9. Vorrichtung nach Anspruch 8, dadurch gekennzeichnet, daß

- Pufferspeicher (14, 15, 16) die von der digitalen Verarbeitungseinheit (7) erzeugten Bits der Digitalsignale (50, 51, 52) zwischenspeichern, die umfassen:

- das Lagestellwert-Digitalsignal (50, 51), das bei geschlossenem Regelkreis direkt dem Eingang des Digital/Analogwandlers (17) zugeführt wird,

- mindestens ein Bit als das Vorschubrichtungsstellwert-Digitalsignal (52), und

- mindestens ein Bit (53) zur Festlegung des Verstärkungsfaktors, das einem Verstärkungsfaktoreinsteller (19) zugeführt wird.

10. Vorrichtung nach Anspruch 8 oder 9, dadurch gekennzeichnet, daß das Impulsdauerbestimmungsglied (23, 24) einen im Zeitpunkt der Erfassung des die Vorschubrichtung ändernden Stellwerts startenden und über einen Impulsdauerschalter (23) zum selben Zeitpunkt voreingestellten Zeitzähler (24) aufweist, der einen Zähltakt konstanter Frequenz zählt.

11. Vorrichtung nach einem der Ansprüche 8 bis 10,
dadurch gekennzeichnet,
daß der Vergleicher (25) die niedrigstwertigen acht Bits des
Lagestellwert-Digitalsignals mit dem digitalen, acht Bits umfassenden Referenzwert (54) vergleicht, der von einem Grenzwertschalter (26) abgegeben wird.

12. Vorrichtung nach einem der Ansprüche 5 bis 11,
dadurch gekennzeichnet,
daß der Antriebsmotor (10) ein Wechselstrommotor ist.

# Fig. 1

Meßwert-aufbe-reitung

Digitale-Steuerung

Δs
D/A-Wandler

$x_i$

$x_S$

$v_S$

$v_i$

5

6

7

8

9

10

11

20

2

1

3

4

12

13

$a_1$

b

$a_2$

0 270 837

Fig. 2

0 270 837

Fig. 3

600 kHz-Takt
12 kHz-Takt

Vorbereitung

Verstärkungs-Umsch.
P<Q vom Vergleicher
Vorbereitungszustand

Vorbereitungssignal 55

Erzeugung des
Rückstellimpulses
Umkehrsignal
Richtungsimpuls
Setzen d. Zeitzählers

Takt f. Zeitzähler
Zähler "0"-Erkennung

$\Delta s+$

$t_1$    $t_2$    $t_3$    $t_4$    Zeit

Referenzwert von
Grenzwertschalter

Referenzwert von
Grenzwertschalter

$\Delta s-$

Beschleunigung in pos. Richtung    Fahren    Bremsen    Beschl. in neg. Richtung

59

0 270 837

| | Europäisches Patentamt | EUROPÄISCHER RECHERCHENBERICHT | Nummer der Anmeldung |
|---|---|---|---|
| | | | EP 87 11 6239 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | MACHINES AND TOOLING, Band 50, Nr. 2, 1979, Seiten 11-15, Melton Mowbray, Leichestershire, GB; M.I. KOVAL et al.: "Certain ways for improving machining accuracy on NC machine tools" * Seite 12, rechte Spalte, letzter Absatz - Seite 14, linke Spalte, Absatz 1; Figuren 1,3,5,8 * | 1,3,5 | G 05 B 19/18 |
| X | FR-A-2 134 048 (FUJITSU) * Seite 2, Zeile 18 - Seite 4, Zeile 28; Figur 1 * | 1,5 | |
| A | US-A-4 042 869 (EICKELBERG) * Spalte 4, Zeilen 39-60; Spalte 5, Zeile 65 - Spalte 6, Zeile 9; Spalte 6, Zeile 40 - Spalte 8, Zeile 50 * | 1,5 | |
| A | MACHINES PRODUCTION, Nr. 250, Januar 1980, Seiten 7-34, Boulogne/Seine, FR; "CN,CNC: comment choisir son tour?" * Seite 23, linke Spalte, Absatz 2 - mittlere Spalte, Absatz 2 * | 1 | RECHERCHIERTE SACHGEBIETE (Int. Cl.4) |
| A | GB-A-1 080 041 (HARBOUR) * Seite 8, Zeile 102 - Seite 9, Zeile 116; Figuren 1,3 * | 1,3,5 | G 05 B 19/00 |

Der vorliegende Recherchenbericht wurde für alle Patentansprüche erstellt

| Recherchenort | Abschlußdatum der Recherche | Prüfer |
|---|---|---|
| DEN HAAG | 23-02-1988 | HAUSER L.E.R. |